# EUROPEAN PATENT SPECIFICATION

(11) **EP 3 194 907 B1**
(45) Date of publication and mention of the grant of the patent: **19.07.2023**
(21) Application number: 15798173.9
(22) Date of filing: 21.09.2015
(51) Int. Cl.: G01F 15/00

(54) **METHOD AND DEVICE FOR REGULATING A WATER FLOW**
VERFAHREN UND VORRICHTUNG ZUR REGULIERUNG EINES WASSERFLUSSES
PROCÉDÉ ET DISPOSITIF DE RÉGULATION D'UN DÉBIT D'EAU

(30) Priority: 19.09.2014 BE 201400715
(43) Date of publication of application: 26.07.2017
(73) Proprietor: Hydroko, 1880 Kapelle-Op-Den-Bos (BE)
(72) Inventor: DEWAELE, Bart, B-3191 Hever (BE)
(74) Representative: Gevers Patents
(86) International application number: PCT/IB2015/001671
(87) International publication number: WO 2016/042395

(56) References cited:
- EP-A1- 2 551 648
- WO-A2-2013/053363
- DE-A1-102007 018 283
- US-A1- 2004 182 439
- US-A1- 2007 284 293
- US-A1- 2008 189 056
- US-A1- 2012 193 559
- US-A1- 2013 068 313
- US-A1- 2013 304 264

## Description

### Technical field

The present invention relates to a method and system for regulating a water flow in a water network.

### Prior art

Water meters are known in the prior art. A first type of water meters in the prior art are analogue water meters. In these water meters the volumetric consumption of water is mechanically reported. Another type of water meters in the prior art are digital water meters. These water meters have a display on which the water consumption is shown digitally. In the case of the digital water meters it is not only water meters that measure the volumetric consumption of water, but also water meters (known as electromagnetic water meters) which measure the water flow and from the water flow calculate the volumetric consumption of water. In practice such water meters are placed in a water network with a flow regulator, such as a stop-cock for instance. The stop-cock can be opened to a greater or lesser extent to increase or reduce the flow. In addition to standard mechanical stop-cocks, electrically-operated stop-cocks are also used in practice. In an electrically-operated stop-cock a motor opens or closes a shutter to a greater or lesser degree in order to increase or reduce the flow. US 2007/284293 discloses a flow regulating system using a wireless transceiver.

A problem with such mechanical and electrical stop-cocks is their accuracy. A minimal change in the opening due to the position of the shutter has a major impact on the water flow. As a result it is very difficult to correctly set water flows. The water network may also become polluted.

### Description of the invention

The invention is set out in the appended claims.

### Brief description of the drawings

The invention will be described below in more detail by way of the following description and the attached drawings.
Figure 1 shows a perspective view of a water meter in accordance with one form of embodiment of the present invention.
Figure 2 shows an exploded view of the form of embodiment of the water meter in figure 1.
Figure 3 shows a cross-section of a regulator base for a regulating module in accordance with one form of embodiment of the present invention.
Figures 4 and 5 respectively show a perspective view with a cut-away and a cross-section of a regulating module in accordance with one form of embodiment of the invention.

### Forms of embodiment of the invention

The present invention will be described below by way of well-defined forms of embodiment and with reference to the drawings, though the invention is not restricted to these and is only defined by the claims. The drawings shown here are only schematic representations and are not restrictive. In the drawings the dimensions of certain components can be shown in an enlarged manner which means that the components are therefore not shown to scale, this being simply for illustrative purposes. The dimensions and the relative dimensions do not necessarily correspond with the actual practical embodiments of the invention.

In addition, terms such as "first", "second", "third" and suchlike are used in the description and the claims in order to differentiate between identical components and not necessarily to indicate a sequential or chronological order. The terms in question are interchangeable in suitable circumstances, and the forms of embodiment of the invention can operate in different sequences from those described or illustrated here.

In addition, terms such as "top", "bottom", "over", "under" and suchlike are used in the description and the claims in order to differentiate between identical components and not necessarily to indicate a sequential or chronological order. The terms in question are interchangeable in suitable circumstances, and the forms of embodiment of the invention can operate in different orientations from those described or illustrated here.

The term "comprising" and terms derived therefrom as used in the claims, must or must not be interpreted as being restricted to the means set out thereafter; the term does not exclude other elements or steps. The term must be interpreted as a specification of the stated properties, whole numbers, steps, or components being referred to, without excluding the presence or addition of one or more additional properties, whole numbers, steps or components or groups thereof. The scope of an expression such as "a device comprising means A and B" is also not just restricted to devices that purely consist of components A and B. What is meant is that with regard to the present invention the only relevant components are A and B.

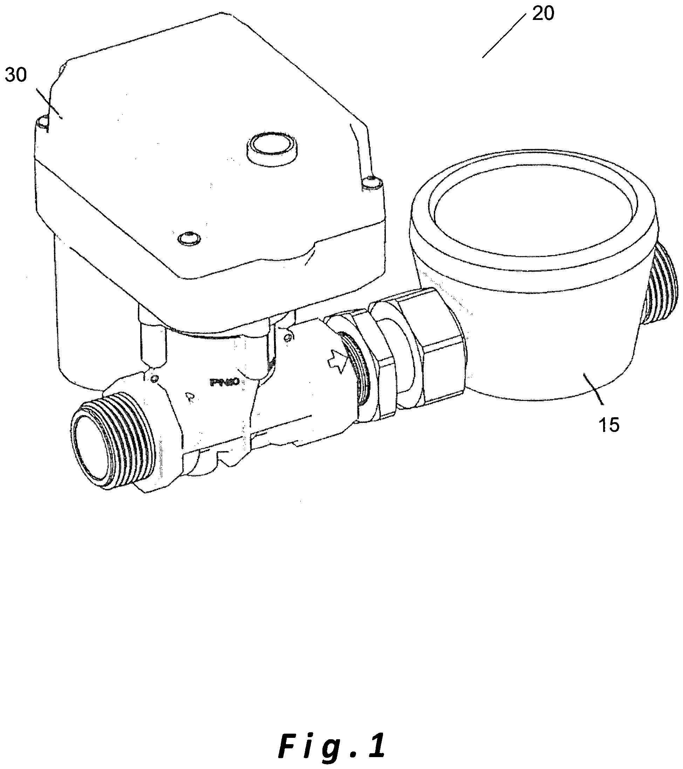

Figure 1 shows a water meter 20 which may be used in the method or system according to the present invention. The water meter 20 can, for example, be arranged in a drinking water network. The water meter 20 comprises a measuring module 15 and a regulating module 30. The measuring module 15 is an ultrasonic measuring module which measures the consumed water volume from which the actual flow can be derived or calculated. The measuring module 15 communicates the water meter reading via a wireless short-distance protocol to the regulating module 30. Via a controller the measuring module 15 creates an electrical signal that is indicative of the actual flow in the water network. The communication between the measuring module 15 and regulating module 30 takes place at regulated intervals. The regulating module 30 then communicates the water meter reading via a wireless long-distance network, for example a SIGFOX network, to the server. A controller in the server than calculates the actual water flow from the water meter reading. In an alternative form of embodiment the water flow is derived or calculated in the measuring module. The regulating module 30 is also equipped to receive signals from the server. Through this the regulating module 30 can receive instructions in order to move into a determined opening position. In a preferred embodiment the regulating module 30 has a number of predefined positions: open, closed, reduced flow, etc. For regulating these, a web-based application or a smart phone application can be used.

A controller calculates the water flow from the volumetric consumption. This can be carried out by a controller in the measuring module 15, the server or the regulating module 30. In an embodiment not forming part of the invention, i.e. in the event that the server calculates or derives the water flow from the water consumption, the controller in the server can then compare the water flow with a desired water flow. The result of this comparison is an indication that the stop-cock flow is equal to, less or more than the desired flow. This result of the comparison is converted into an electrical signal that is sent to the regulating module 30. According to the invention, it is not the result of the comparison that is sent to the regulating module but the water flow, and the comparison is carried out by a controller in the regulating module.

In the alternative form of embodiment which is also covered by the invention wherein the calculation of the water flow from the volumetric water consumption is carried out in the controller of the regulating module 30, the controller in the regulating module 30 also performs the comparison and the controller of the regulating module 30 also creates the signal for controlling the shutter of the regulating module, for example an electric stop-cock.

Both the measuring module 15 and regulating module 30 are made of injection-moulded parts of composite material. As a result of this the water meter 20 is lead-free.

The measuring module 15 and regulating module 30 are designed to be coupled to one another.

The measuring module 15 is also fitted with an internal lithium battery with a very long service life. In a preferred embodiment the service life of the lithium battery is around 16 years. In another form of embodiment this service life is approximately 24 years.

In use, the measuring module 15 and the regulating module 30 are sealed so that they cannot be opened without breaking the seal.

The water meter 20 in accordance with the embodiment in figure 1 uses 2 types of wireless communication. On the one hand there is short-distance wireless communication between the measuring module and the regulating module. An example of such short-distance wireless communication is wireless M-Bus radio communication. This short-distance wireless communication is used in the form of embodiment in figure 1 in order to communicate the water level measured in the measuring module 15 to the regulating module 30. On the other hand there is long-distance wireless communication between the measuring module 30 and a server. An example of such long-distance wireless communication is SIGFOX radio communication.

The measuring module 15 is equipped with a wireless short-distance protocol (for example M-Bus) emitter and the regulating module 30 is equipped with a wireless short-distance protocol receiver. The communication between the measuring module 15 and regulating module 30 is unidirectional, i.e. from the measuring module 15 to the regulating module 30.

In one preferred embodiment the water level at midnight is always communicated from the measuring module 15 to the regulating module 30. In an alternative embodiment the water level is communicated every hour. The greater the frequency of communicating the water level, the more accurately a water consumption profile can be built up.

The wireless short-distance signal is preferably communicated in encrypted form in order to protect the communicated datafrom unauthorised access.

The wireless long-distance communication between the measuring module 30 and the server is bidirectional, i.e. from the measuring module 30 to the server on the one hand and from server to the regulating module 30 on the other hand. The water level is communicated from the regulating module 30 to the server at selected intervals. This takes place by communicating an electrical signal to the server. In the technical field of wireless communications the term "uplink" report is used for this. This electrical signal or "uplink" report generally contains one or more of the following pieces of information:
- measuring module operating information (e.g. alarm)
- maximum flow during the last day
- signal strength of the wireless short-distance communication between the measuring module and the regulating module.
- water level
- ambient temperature

In response to the "uplink" report from the regulating module 30, the server sends an electrical signal back to the regulating module 30. In the technical field of wireless communications the term "downlink" report is used for this electrical signal. This electrical signal or "downlink" report generally contains one or more of the following pieces of information:
- clock synchronisation parameters
- indication of the time when the next "uplink" report has to be sent
- position of the shutter, i.e. the opening of the flow regulator

In a preferred embodiment the position of the shutter is a 4-bit parameter for example. The positions of the shutter are at least open, closed and a reduced flow. The more positions the shutter has, the more accurately the flow can be regulated. In a preferred embodiment the shutter is continuously regulated and the position of the shutter is shown as a number of revolutions that the motor that controls the shutter has to turn in one or the other direction.

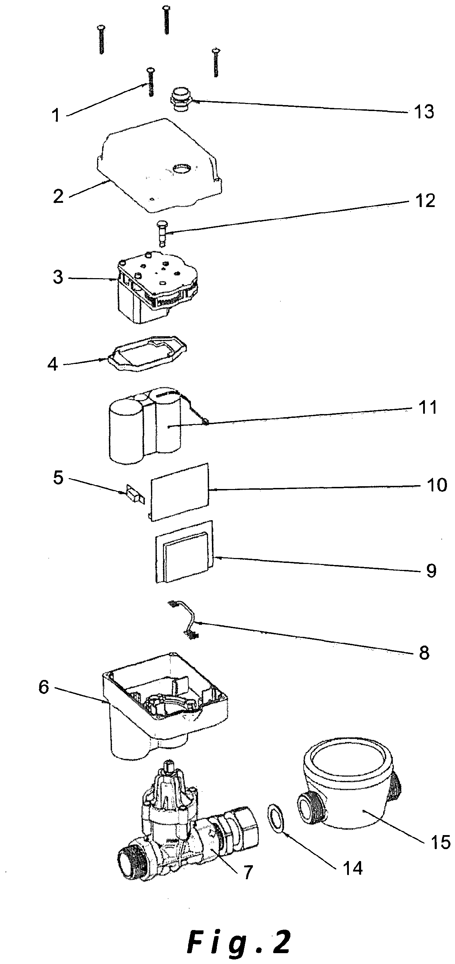

With reference to figure 2, an exploded view of the water meter 20 is shown. The regulating module 30 is connected to the measuring module 15 by a screw connection. A seal 14 is applied to make the screw connection leak-proof. In the regulating module a regulator base 7 is connected to a motor-gear box assembly 3. The motor in this assembly 3 is provided with energy by a lithium battery 11. In order to assemble the regulating module 30 a base casing 6 is mounted on the regulator base 7. Placed in the base casing 6 is a lithium battery 11 which is connected to the motor-gear box assembly 7 via a cable 8. The motor-gear box assembly 7 is positioned in the base casing 7 via a motor support element 4. A print plate support element 10 positions the print plate 9 in the base casing 6. An antenna 5 is provided for wirelessly receiving electrical signals and guiding them to a controller on the print plate 9. A top casing 2 is mounted on the bottom casing 6 with screws 1. The top casing 2 seals the casing and thereby protects the print plate 9 and the motor-gear box assembly 7. A switch 13 is provided in the top casing 2. The switch 13 is connected to a contact on the print plate 9.

In an alternative form of embodiment the measuring module 15 is equipped with a wireless long-distance protocol emitter (e.g. SIGFOX). In this form of embodiment the measuring module 15 can communicate the electrical signal indicative of the measured water flow or consumed water volume to the regulating model 30 or to the server. Both forms of embodiment have advantages. In one form of embodiment in which the signal from the measuring module 15 is sent to the regulating module 30, the advantage is that the flow can be regulated very precisely without the need for a supervising server. In a form of embodiment in which the signal from the measuring module 15 is sent to the server the advantage is that examples of "special" situations can be monitored.

A number of "special" situations will now be discussed in more detail. They are not limited to *one* single form of embodiment of the invention, but form part of several forms of embodiment of the invention. A first special situation is leakage detection. The measuring module is fitted with a leakage detection algorithm: if the water flow is less than a predetermined value over a predetermined interval of time, it is indicated that there is a leak. The measuring module 15 then creates a signal indicative of leakage detection that in turn is received by the server. The server can then, for example, create the action for switching off the regulating module 30. In order to do this, the controller in the server creates an electrical signal with information to control the motor 24 in the regulating module 30 and then sends this signal (wirelessly or via cables) to the regulating module 30. In an alternative embodiment the electrical signal indicative of leakage detection can be sent from the measuring module to the regulating module without the intervention of the server.

Another special situation is backflow detection. If the measuring module detects that water is flowing in the wrong direction, the measuring module creates a signal that is sent to the server. Just as in leakage detection the server can then create the action for switching off the regulating module. In an alternative form of embodiment the signal can be directly received by the regulating module 30.

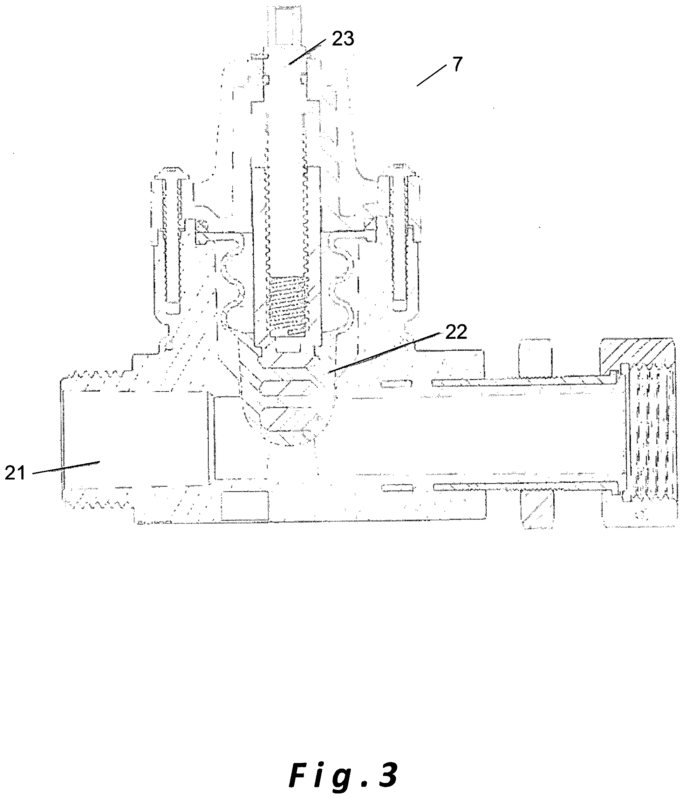

Figure 3 shows the regulator basis 7 of a water meter 30 in accordance with one form of embodiment of the invention. The regulator base 7 has a channel 21 through which water flow when it is in operation. The channel 21 is closed to a greater or lesser extent by a shutter 22 in order to regulate the flow. The shutter 22 moves up and down through the rotation of a regulating pin 23.

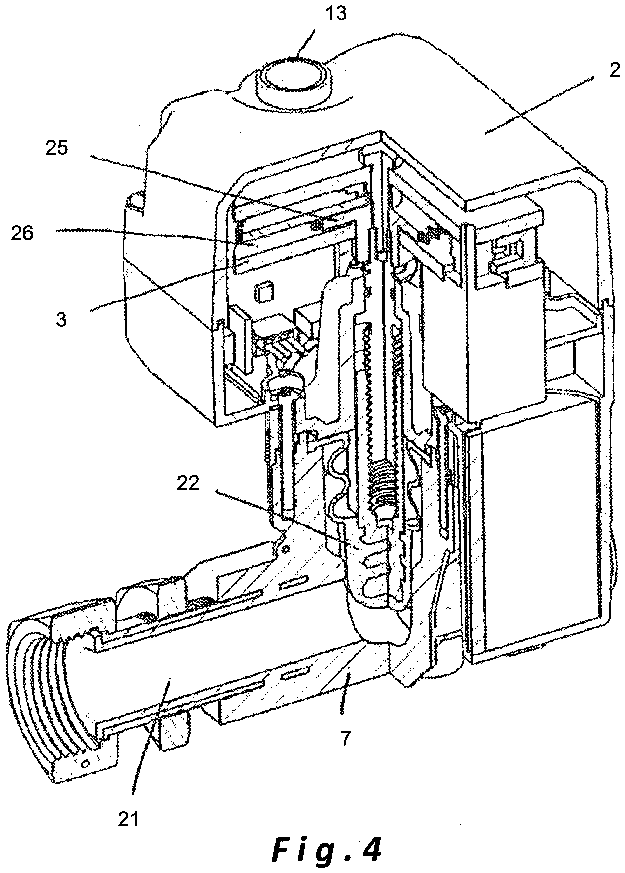

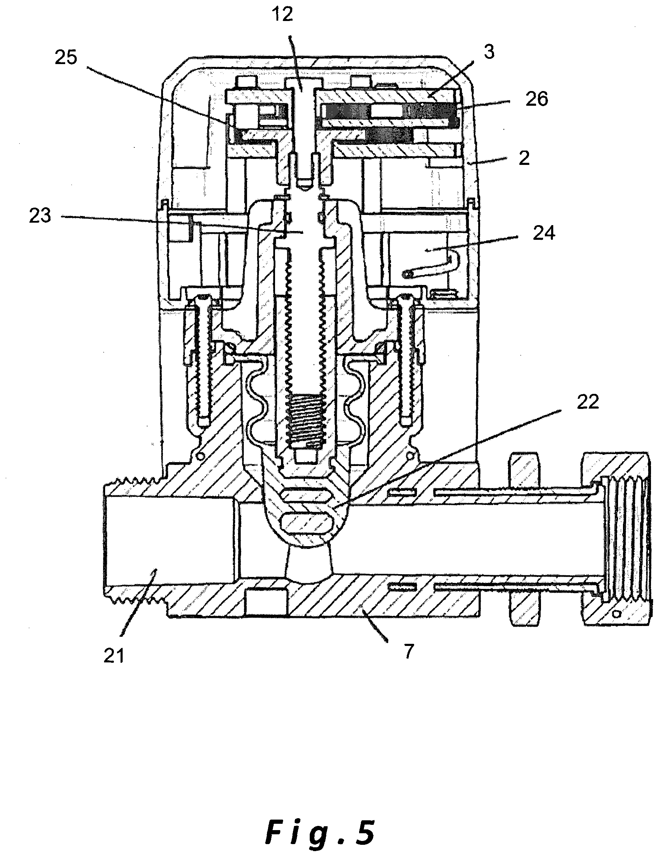

With reference to figures 4 and 5, the regulating pin 23 of the regulator base 7 rotates though being driven by a motor 24. The revolutions of the motor 24 are converted into rotations of the regulating pin 24 via a set of gearwheels 25 in a gear box 26. The motor 24 and the gear box 26 together form the aforementioned motor-gear box assembly 3.

In an alternative form of embodiment not according to the claimed invention the measuring module 15 is electrically connected with the regulating module 30 via a cable. The measuring module 15 measures the consumed volume of water and sends this via an electrical signal to the regulating module 30. The regulating module 30 receives the electrical signal. A controller in the regulating module calculates the actual water flow on the basis of the consumed water volume of a determined interval of time via an algorithm in the controller. The controller in the regulating module 30 then calculates the difference between the desired water flow and the actual water flow. The controller then creates an electrical signal for the motor 24 to perform a calculated number of revolutions in one direction or the other direction on the basis of the calculated difference between the desired water flow and the actual water flow. In this way the water flow in the channel 21 can be set very precisely and continuously adjusted.
In another form of embodiment of the invention the measuring module 15 and/or the regulating module 30 is/are connected with a server via a wired network. In forms of embodiment with a measuring module, regulating module and server, controller activities can only be carried out in one of the three components each time with the comparison between the actual flow and the desired flow always being carried out by a controller in the regulating module according to the invention.

The form of embodiment in the figures is described for a measuring module that measures the consumed water volume. It is self-evident that these forms of embodiment can also be implemented with a measuring module that measures the water flow.

## Claims

1. A method of regulating the water flow in a water network wherein a device (20) for measuring and regulating a water flow is present, the device comprising:
a measuring module (15) for measuring the water flow or consumed water volume, the measuring module comprising:
means of converting the measured water flow or consumed water volume into an electrical signal, and
a wireless communications emitter for sending the electrical signal; and
a regulating module (30) for regulating the water flow, the regulating module comprising:
a wireless communications receiver for receiving the electrical signal from the measuring module, and
means for regulating the flow on the basis of the received electrical signal
the method comprising the following steps:
setting a water flow in a water network with the regulating module on the basis of a first electrical signal indicative of a desired flow;
creating a second electrical signal in the measuring module indicative of the actual flow in the water network;
sending the second electrical signal from the measuring module to the regulating module via the wireless communications emitter;
receiving the second electrical signal in the regulating module via the wireless communications receiver;
comparing the actual flow with the desired flow in a controller;
creating a third signal indicative of the difference between the actually measured flow and the desired flow, wherein the creation of a third signal indicative of the difference between the actually measured flow and the desired flow is carried out by a controller in the regulating module; and
regulating the flow in the regulating module on the basis of the third signal indicative of the difference between the actually measured flow and the desired flow.

2. A method according to claim 1, wherein the measuring module is configured to measure the consumed volume of water and wherein the device further comprises: means of calculating an actual flow on the basis of the consumed water volume over a certain interval of time,
wherein the method comprises the following step:
calculating an actual flow on the basis of the measured consumed water volume over a certain interval of time.

3. A method according to claim 1 or 2, wherein the calculation of the actual flow is carried out by a controller in the measuring module or by a controller in the regulating module.

4. A method according to any one of the preceding claims, wherein the comparison of the actual flow with the desired flow is carried out by a controller in the measuring module or by a controller in the regulating module.

5. A method according to any one of the preceding claims, wherein method further comprises the following steps:
creating in the measuring module a fourth electrical signal indicative of the actual flow in the water network; and
receiving the fourth electrical signal in the regulating module.

6. A method according to any one of the preceding claims, wherein the wireless communication emitter operates with short-distance wireless communication.

7. A method according to claim 6, wherein the short-distance communication is wireless M-Bus radio communication.

8. A system for measuring and regulating a water flow in a water network, the system comprising:
a measuring module for measuring the water flow or used water volume, the measuring module comprising:
means of converting the measured water flow or used water volume into an electrical signal, and
a wireless communications emitter for sending the electrical signal;
a server configured to receive and send electrical signals, the server comprising means of controlling the electrical signals; and
a regulating module for regulating the water flow, the regulating module comprising:
a wireless communications receiver for receiving the electrical signal from the measuring module,
means for receiving the electrical signals from the server, and
means for regulating the flow on the basis of the electrical signal received from the measuring module and on the basis of the electrical signals received from the server,
wherein the system is configured to regulate the water flow according to the method of any one of the preceding claims.

9. A system according to claim 8, wherein the wireless communication emitter operates with short-distance wireless, preferably M-Bus radio, communication.

## Patentansprüche

1. Verfahren zum Regulieren des Wasserdurchflusses in einem Wassernetz, wobei eine Vorrichtung (20) zum Messen und Regulieren eines Wasserdurchflusses vorhanden ist, wobei die Vorrichtung Folgendes umfasst:
ein Messmodul (15) zum Messen des Wasserdurchflusses oder der verbrauchten Wassermenge, wobei das Messmodul umfasst:
Mittel zum Umwandeln des gemessenen Wasserdurchflusses oder der verbrauchten Wassermenge in ein elektrisches Signal, und
einen drahtlosen Kommunikationssender zum Senden des elektrischen Signals; und
ein Regulierungsmodul (30) zum Regulieren des Wasserdurchflusses, wobei das Regulierungsmodul Folgendes umfasst:
einen drahtlosen Kommunikationsempfänger zum Empfangen des elektrischen Signals vom Messmodul, und
Mittel zum Regulieren des Durchflusses auf der Grundlage des empfangenen elektrischen Signals,
wobei das Verfahren die folgenden Schritte umfasst:
Einstellen eines Wasserdurchflusses in einem Wassernetz mit dem Regulierungsmodul auf der Grundlage eines ersten elektrischen Signals, das einen gewünschten Durchfluss angibt;
Erzeugen eines zweiten elektrischen Signals im Messmodul, das den tatsächlichen Durchfluss im Wassernetz angibt;
Senden des zweiten elektrischen Signals vom Messmodul an das Regulierungsmodul über den drahtlosen Kommunikationssender;
Empfangen des zweiten elektrischen Signals im Regulierungsmodul über den drahtlosen Kommunikationsempfänger;
Vergleichen des tatsächlichen Durchflusses mit dem gewünschten Durchfluss in einer Steuereinheit;
Erzeugen eines dritten Signals, das die Differenz zwischen dem tatsächlich gemessenen Durchfluss und dem gewünschten Durchfluss angibt, wobei das Erzeugen eines dritten Signals, das die Differenz zwischen dem tatsächlich gemessenen Durchfluss und dem gewünschten Durchfluss angibt, durch eine Steuereinheit im Regulierungsmodul durchgeführt wird; und
Regulieren des Durchflusses im Regulierungsmodul auf der Grundlage des dritten Signals, das die Differenz zwischen dem tatsächlich gemessenen Durchfluss und dem gewünschten Durchfluss angibt.

2. Verfahren nach Anspruch 1, wobei das Messmodul so konfiguriert ist, dass es die verbrauchte Wassermenge misst, und wobei die Vorrichtung weiter Folgendes umfasst:
Mittel zum Berechnen eines tatsächlichen Durchflusses auf der Grundlage der verbrauchten Wassermenge über ein bestimmtes Zeitintervall, wobei das Verfahren den folgenden Schritt umfasst:
Berechnen eines tatsächlichen Durchflusses auf der Grundlage der gemessenen verbrauchten Wassermenge über ein bestimmtes Zeitintervall.

3. Verfahren nach Anspruch 1 oder 2, wobei die Berechnung des tatsächlichen Durchflusses von einer Steuereinheit im Messmodul oder von einer Steuereinheit im Regulierungsmodul durchgeführt wird.

4. Verfahren nach einem der vorstehenden Ansprüche, wobei der Vergleich des tatsächlichen Durchflusses mit dem gewünschten Durchfluss von einer Steuereinheit im Messmodul oder von einer Steuereinheit im Regulierungsmodul durchgeführt wird.

5. Verfahren nach einem der vorstehenden Ansprüche, wobei das Verfahren weiter die folgenden Schritte umfasst:
Erzeugen eines vierten elektrischen Signals im Messmodul, das den tatsächlichen Durchfluss im Wassernetz angibt; und
Empfangen des vierten elektrischen Signals im Regulierungsmodul.

6. Verfahren nach einem der vorstehenden Ansprüche, wobei der drahtlose Kommunikationssender mit drahtloser Kurzstreckenkommunikation arbeitet.

7. Verfahren nach Anspruch 6, wobei die Kurzstreckenkommunikation eine drahtlose M-Bus-Funkkommunikation ist.

8. System zum Messen und Regulieren eines Wasserdurchflusses in einem Wassernetz, wobei das System Folgendes umfasst:
ein Messmodul zum Messen des Wasserdurchflusses oder der verbrauchten Wassermenge, wobei das Messmodul umfasst:
Mittel zum Umwandeln des gemessenen Wasserdurchflusses oder der verbrauchten Wassermenge in ein elektrisches Signal, und
einen drahtlosen Kommunikationssender zum Senden des elektrischen Signals;
einen Server, der zum Empfangen und Senden elektrischer Signale konfiguriert ist, wobei der Server Mittel zum Steuern der elektrischen Signale umfasst; und
ein Regulierungsmodul zum Regulieren des Wasserdurchflusses, wobei das Regulierungsmodul Folgendes umfasst:
einen drahtlosen Kommunikationsempfänger zum Empfangen des elektrischen Signals vom Messmodul,
Mittel zum Empfangen der elektrischen Signale vom Server, und
Mittel zum Regulieren des Durchflusses auf der Grundlage des vom Messmodul empfangenen elektrischen Signals und auf der Grundlage der vom Server empfangenen elektrischen Signale,
wobei das System so konfiguriert ist, dass es den Wasserdurchfluss gemäß dem Verfahren nach einem der vorstehenden Ansprüche reguliert.

9. System nach Anspruch 8, wobei der drahtlose Kommunikationssender mit drahtloser Kurzstreckenkommunikation, bevorzugt M-Bus-Funk, arbeitet.

## Revendications

1. Procédé de régulation du débit d'eau dans un réseau d'eau dans lequel un dispositif (20) pour mesurer et réguler un débit d'eau est présent, le dispositif comprenant :
un module de mesure (15) pour mesurer le débit d'eau ou le volume d'eau consommé, le module de mesure comprenant :
des moyens de conversion du débit d'eau mesuré ou du volume d'eau consommé en un signal électrique, et
un émetteur de communication sans fil pour envoyer le signal électrique ; et
un module de régulation (30) pour réguler le débit d'eau, le module de régulation comprenant :
un récepteur de communication sans fil pour recevoir le signal électrique du module de mesure, et
des moyens pour réguler le débit sur la base du signal électrique reçu le procédé comprenant les étapes suivantes :
le réglage d'un débit d'eau dans un réseau d'eau avec le module de régulation sur la base d'un premier signal électrique indicatif d'un débit souhaité ;
la création d'un deuxième signal électrique dans le module de mesure indicatif du débit réel dans le réseau d'eau ;
l'envoi du deuxième signal électrique du module de mesure au module de régulation via l'émetteur de communication sans fil ;
la réception du deuxième signal électrique dans le module de régulation via le récepteur de communication sans fil ;
la comparaison du débit réel au débit souhaité dans un dispositif de commande ;
la création d'un troisième signal indicatif de la différence entre le débit réellement mesuré et le débit souhaité, dans lequel la création d'un troisième signal indicatif de la différence entre le débit réellement mesuré et le débit souhaité est effectuée par un dispositif de commande dans le module de régulation ; et
la régulation du débit dans le module de régulation sur la base du troisième signal indicatif de la différence entre le débit réellement mesuré et le débit souhaité.

2. Procédé selon la revendication 1, dans lequel le module de mesure est configuré pour mesurer le volume d'eau consommé et dans lequel le dispositif comprend en outre :
des moyens de calcul d'un débit réel sur la base du volume d'eau consommé au cours d'un certain intervalle de temps, dans lequel le procédé comprend l'étape suivante :
le calcul d'un débit réel sur la base du volume d'eau consommé mesuré au cours d'un certain intervalle de temps.

3. Procédé selon la revendication 1 ou 2, dans lequel le calcul du débit réel est effectué par un dispositif de commande dans le module de mesure ou par un dispositif de commande dans le module de régulation.

4. Procédé selon l'une quelconque des revendications précédentes, dans lequel la comparaison du débit réel au débit souhaité est effectuée par un dispositif de commande dans le module de mesure ou par un dispositif de commande dans le module de régulation.

5. Procédé selon l'une quelconque des revendications précédentes, dans lequel le procédé comprend en outre les étapes suivantes :
la création dans le module de mesure d'un quatrième signal électrique indicatif du débit réel dans le réseau d'eau ; et
la réception du quatrième signal électrique dans le module de régulation.

6. Procédé selon l'une quelconque des revendications précédentes, dans lequel l'émetteur de communication sans fil fonctionne avec une communication sans fil à courte distance.

7. Procédé selon la revendication 6, dans lequel la communication à courte distance est une communication radio M-Bus sans fil.

8. Système de mesure et de régulation d'un débit d'eau dans un réseau d'eau, le système comprenant :
un module de mesure pour mesurer le débit d'eau ou le volume d'eau utilisé, le module de mesure comprenant :
des moyens de conversion du débit d'eau mesuré ou du volume d'eau utilisé en un signal électrique, et
un émetteur de communication sans fil pour envoyer le signal électrique ;
un serveur configuré pour recevoir et envoyer des signaux électriques, le serveur comprenant des moyens de commande des signaux électriques ; et
un module de régulation pour réguler le débit d'eau, le module de régulation comprenant :
un récepteur de communication sans fil pour recevoir le signal électrique du module de mesure,
des moyens pour recevoir les signaux électriques du serveur, et
des moyens de régulation du débit sur la base du signal électrique reçu du module de mesure et sur la base des signaux électriques reçus du serveur,
dans lequel le système est configuré pour réguler le débit d'eau selon le procédé de l'une quelconque des revendications précédentes.

9. Système selon la revendication 8, dans lequel l'émetteur de communication sans fil fonctionne avec une communication sans fil à courte distance, de préférence radio M-Bus.
